(19) Europäisches Patentamt
European Patent Office
Office européen des brevets

(11) EP 0 867 480 A2

(12) **EUROPEAN PATENT APPLICATION**

(43) Date of publication:
**30.09.1998 Bulletin 1998/40**

(51) Int. Cl.$^6$: **C09D 5/44**

(21) Application number: **98105184.0**

(22) Date of filing: **23.03.1998**

(84) Designated Contracting States:
**AT BE CH DE DK ES FI FR GB GR IE IT LI LU MC NL PT SE**
Designated Extension States:
**AL LT LV MK RO SI**

(30) Priority: **24.03.1997 JP 69396/97**
**28.07.1997 JP 201086/97**

(71) Applicant: **KANSAI PAINT CO. LTD.**
**Amagasaki-shi Hyogo-ken (JP)**

(72) Inventors:
- **Doi, Yasuo**
**Ebina-shi, Kanagawa-ken (JP)**
- **Nishida, Reiziro**
**Chigasaki-shi, Kanagawa-ken (JP)**
- **Tominaga, Akira**
**Chigasaki-shi, Kanagawa-ken (JP)**

(74) Representative:
**Kraus, Walter, Dr. et al**
**Patentanwälte Kraus, Weisert & Partner**
**Thomas-Wimmer-Ring 15**
**80539 München (DE)**

# (54) Cationically electrodepositable coating composition

(57) The present invention provides a cationically electrodepositable coating composition comprising:

a neutralized product obtained by neutralizing a resin (A) having hydroxyl groups and cationizable groups with an acid;
an epoxy group-containing curing agent (B) having at least two groups on average per molecule of an epoxy group-containing functional group comprising an epoxy group selected from the group consisting of an epoxy group bonded directly to a ring carbon atom of an alicyclic ring or a bridged alicyclic ring and an epoxy group formed by two adjacent carbon atoms constituting the alicyclic ring or the bridged alicyclic ring and an oxygen atom; and
a neutralized product obtained by neutralizing an imidazole compound (C) having a molecular weight per imidazole ring falling in a range of 68 to 300 with an acid,
said components (A), (B) and (C) being stably dispersed in an aqueous medium. The above composition is excellent in a curability and a storage stability and can form an electrodeposited coating film having an excellent adhesive strength in the initial stage and after a moisture resistance test even on the smooth surface of a metal base material.

EP 0 867 480 A2

## Description

The present invention relates to a cationically electrodepositable coating composition which is capable of forming a coated film having an excellent adhesion to a base material and which is excellent in curability and storage stability.

It has so far been known to use imidazole compounds as a curing agent for an epoxy resin in organic solvent type coatings and powder coatings.

In general, however, imidazole compounds have a high crystallinity and are hard to be mixed with a coating resin in a water based coating, so that they are deposited and separated. Accordingly, imidazole compounds are not used as a curing agent for an epoxy resin in a water based coating.

In a water based coating, a method in which an imidazole compound is molten by heating and mixed with a coating resin and in which it is then dispersed in an aqueous medium to prepare an emulsion is considered as a method for mixing an imidazole compound with a water based paint resin. However, imidazole compounds inherently have poor miscibility with water based coating resins and poor solubility in aqueous media, and therefore they have the problems that they are gradually precipitated during storage and allow the precipitates to become nuclei to agglomerate and settle down emulsion particles and that the curability of the coated film is lowered. Further, they have the problem that a polymerization and curing reaction of an epoxy resin takes place in melting by heating to cause gelation in a certain case.

The present applicants have disclosed a water based coating composition comprising a resin containing hydroxyl groups and cationized groups, an epoxy group-containing curing agent and a metal compound which is a curing catalyst in Japanese Laid-Open Patent Publication 255874/1990 (U.S. Patent No. 5,247,029). This composition usually shows an excellent coated film performance, but when using it as an electrodepositable coating composition, the electrodeposited coating film does not have a satisfactory adhesive strength when a metal base material has a smooth surface. In particular, the electrodeposited coating film after a moisture resistance test tends to be reduced in an adhesion to the surface of the metal base material. Further, there has been the problem that the electrodeposited coating film does not have satisfactory curability.

A principal object of the present invention is to provide an electrodepositable coating composition comprising a resin containing a hydroxyl group and a cationized group and an epoxy resin, which is capable of providing an electrodeposited coating film showing a satisfactory adhesive strength even when a metal base material has a smooth surface and having an excellent adhesive strength on the surface of the metal base material even after a moisture resistance test and which gives an excellent curability to the electrodeposited coating film and is excellent as well in a storage stability.

Intensive researches continued by the present inventors in order to achieve the object described above have resulted in finding that the object of the present invention can be achieved by substituting a specific imidazole compound for a metal compound used as a curing catalyst and allowing this imidazole compound to be present in the form of a stably dispersed neutralized product in the coating, and thus coming to complete the present invention.

Thus, the present invention provides a cationically electrodepositable coating composition comprising:

a neutralized product obtained by neutralizing a resin (A) having hydroxyl groups and cationizable groups with an acid;
an epoxy group-containing curing agent (B) having at least two groups on average per molecule of an epoxy group-containing functional group comprising an epoxy group selected from the group consisting of an epoxy group bonded directly to a ring carbon atom of an alicyclic ring or a bridged alicyclic ring and an epoxy group formed by two adjacent carbon atoms constituting the alicyclic ring or the bridged alicyclic ring and an oxygen atom; and
a neutralized product obtained by neutralizing an imidazole compound (C) having a molecular weight per imidazole ring falling in a range of 68 to 300 with an acid,
said components (A), (B) and (C) being stably dispersed in an aqueous medium.

The respective components of the electrodepositable coating composition of the present invention and a production process for the coating composition shall be explained below in further detail.

Resin (A) having hydroxyl groups and cationizable groups:

The resin (A) having hydroxyl groups and cationizable groups used in the composition of the present invention [which may be hereinafter referred to as "the base resin (A)"] is any resin containing hydroxyl groups reactive with the epoxy group of the component (B) and a sufficient number of cationizable groups for forming a stable aqueous dispersion. As said base resin (A), for example, what follows may be cited.

(i) A reaction product obtained by reacting a polyepoxy resin with a cationizing agent;

(ii) A polycondensation product of a polycarboxylic acid and polyamine (see U.S. Patent 2,450,940);

(iii) A polyaddition product of polyisocyanate and polyol and mono- or poly-amine;

(iv) A copolymer of an acryl or vinyl monomer containing a hydroxyl group and one containing amino group (see Japanese Patent Publications Nos. 12395/1970 and 12396/1970);

(v) An adduct of a polycarboxylic acid resin and an alkylene imine (see U.S. Patent 3,403,088); etc.

Since the specific examples of these cationic resins and the processes for their production are described in, for example, Japanese Patent Publications Nos. 12395/1970 and 12396/1970, and GB 1327071 as well as U.S. Patents 2,450,940, 3,403,088, 3,891,529 and 3,963,663, detailed description of the specific examples of these cationic resins and the processes for their production is replaced by quotation of these references in this specification.

What is especially desirable as the base resin (A) in the present invention is, from the point of view of corrosion resistance, a reaction product obtained by reacting a polyepoxide compound obtained from a polyphenol compound and epichlorohydrin with a cationizing agent included in (i), above.

Said polyepoxide compound is a compound having at least 2 epoxy groups

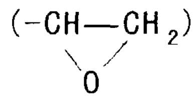

in one molecule, and having a number average molecular weight within the range of generally at least 200, preferably 400 to 4,000, more preferably 800 to 2,000 is suitable. As such polyepoxide compound, what is known per se may be used, for example, polyglycidyl ether of a polyphenol compound which may be produced by reacting a polyphenol compound with epichlorohydrin in the presence of an alkali, is included.

As the polyphenol compound which may be used in the above reaction, there may be cited, for example, bis(4-hydroxyphenyl)-2,2-propane, 4,4'-dihydroxybenzophenone, bis(4-hydroxyphenyl)-1,1-ethane, bis(4-hydroxyphenyl)-1,l-isobutane, bis(4-hydroxy-tert-butyl-phenyl)-2,2-propane, bis(2-hydroxynaphthyl)methane, 1,5-dihydroxynaphthalene, bis(2,4-dihydroxyphenyl)methane, tetra(4-hydroxyphenyl)-1,1,2,2-ethane, 4,4'-dihydroxydiphenylether, 4,4'-dihydroxydiphenylsulfone, phenol novolak and cresol novolak.

Of the aforesaid polyepoxide compounds, what is especially preferable for the production of the base resin (A), is diglycidylether of a bisphenol compound having a number average molecular weight of at least about 380, more preferably about 800 to about 2,000 and an epoxy equivalent of 190 to 2,000, preferably 400 to 1,000, especially what is represented by the following formula:

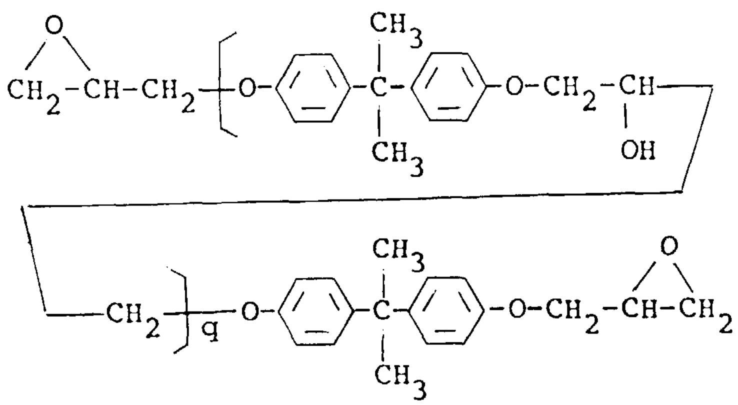

(q: 0-7)

Said polyepoxide compound may be partly reacted with polyol, polyether polyol, polyester polyol, polyamide amine, a polycarboxylic acid and polyisocyanate, and further, it may be graft polymerized with ε-caprolactone or an acrylic monomer, etc.

On the other hand, as a cationizing agent for introducing a cationizable group to said polyepoxide compound, there may be cited an aliphatic, alicyclic or aromatic-aliphatic primary or secondary amine, tertiary amine salt, secondary sulfide salt and tertiary phosphine salt. These react with an epoxy group to produce a cationizable group. It is further

possible to introduce a cationizable group by reacting a tertiary amino monoisocyanate obtained from a tertiary aminoalcohol and a diisocyanate, with a hydroxyl group of the epoxy resin.

As examples of the amine compound in said cationizing agent, for example, the following amines may be exemplified.

(1) Primary amines such as methyl amine, ethyl amine, n- or iso-propyl amine, monoethanol amine and n- or iso-propanol amine;
(2) Secondary amines such as diethyl amine, diethanol amine, di-n- or iso-propanol amine, N-methylethanol amine and N-ethylethanolamine; and
(3) Polyamines such as ethylene diamine, diethylene triamine, hydroxyethylaminoethyl amine, ethylaminoethyl amine, methylaminopropyl amine, dimethylaminoethyl amine and dimethylaminopropyl amine.

Of these amines, alkanol amines having hydroxyl groups are preferable. Also, a primary amino group of polyamines may be reacted with ketone in advance to block said group, and then the remaining active hydrogen may be reacted with an epoxy group.

Further, besides said amine compounds, a basic compound such as ammonia, hydroxyl amine, hydrazine, hydroxyethyl hydrazine and a N-hydroxyethyl imidazoline compound may be used similarly.

Basic groups formed by using these compounds may be protonated with an acid, especially preferably a water-soluble organic carboxylic acid such as formic acid, acetic acid, glycolic acid and lactic acid to be made into cationized groups.

Furthermore, tertiary amines such as triethyl amine, triethanol amine, N,N-dimethylethanol amine, N-methyldiethanol amine, N,N-diethylethanol amine and N-ethyldiethanol amine may be used, they may be protonated with an acid in advance, and then reacted with an epoxy group to be made into quaternary salts.

Besides the salts of tertiary amines, salts of sulfides such as diethyl sulfide, diphenyl sulfide, tetramethylene sulfide or thiodiethanol and boric acid, carbonic acid or an organic monocarboxylic acid may be reacted with an epoxy group to make them tertiary sulfonium salts.

In addition, salts of phosphines such as triethyl phosphine, phenyldimethyl phosphine, diphenylmethyl phosphine or triphenyl phosphine and such acids as mentioned above may be reacted with an epoxy group to make them quaternary phosphonium salts.

As hydroxyl groups of the base resin (A) used in the present invention, there may be cited, for example, primary hydroxyl groups of alkanol amines as said cationizing agent, of ring opened caprolactone and of general polyols; and secondary hydroxyl groups of epoxide resin. Of these, primary hydroxyl groups by alkanol amines are preferable because of excellent in crosslinking reactivity with the epoxy group-containing curing agent (B). As such alkanol amines, what is exemplified in said cationizing agent is preferable.

The content of hydroxyl groups in the base resin (A) is, from the point of view of the crosslinking reactivity with the epoxy group contained in the epoxy group-containing curing agent (B), preferably, calculated as a hydroxyl group equivalent, within the range of 20 to 5,000, especially 60 to 3,000, more especially 100 to 1,000. Especially, the primary hydroxyl group equivalent is preferably within the range of 200 to 1,000. The content of cationizable groups is preferably in excess of the lower limit necessary for stably dispersing said base resin (A), and generally it is preferably within the range of 3 to 200, especially 6 to 140, more especially 10 to 80 of amine value calculated as KOH mg/g solids. However, even if the cationizable group content is less than 3, it is possible to use it after making it an aqueous dispersion by the use of a surface active agent.

The base resin (A) used in the present invention has hydroxyl groups and cationizable groups and is desirably free from free epoxy groups as a rule.

Epoxy group-containing curing agent (B):

The epoxy-group containing curing agent (B) [which may be referred to hereinafter as "the curing agent (B)"] is a curing agent for forming a crosslinked coating film mainly by an etherification reaction with the base resin (A) as mentioned above, which contains at least 2, preferably at least 3, specified "epoxy functional groups" on average in one molecule.

Namely, said epoxy functional group in the curing agent (B) comprises an epoxy group and an alicyclic ring or bridged alicyclic ring in which said alicyclic ring is a 4-10 member, preferably 5 or 6 member saturated carbon monocyclic or polycyclic ring, while said bridged alicyclic ring contains bridges (endmethylene, endethylene, etc.) of a straight chain (linear) or branched $C_{1-6}$ (preferably $C_{1-4}$) alkylene group (for example, $-CH_2-$, $-CH_2CH_2-$, $-CH(CH_3)-$, $-CH(CH_3)CH_2-$, $-C(CH_3)_2-$, $-CH(C_2H_5)CH_2-$, etc.) between 2 carbon atoms constituting said monocyclic or polycyclic ring.

On the other hand, an epoxy group

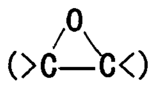

is important in that one of the carbon atoms in said epoxy group is directly bonded to the cyclic carbon atom (or atoms) of said alicyclic ring or said bridged alicyclic ring [see, for example, the following formulae (I) and (II)], or the two carbon atoms of said epoxy group are common with the two adjoining carbon atoms constituting the ring in said alicyclic ring or said bridged alicyclic ring [see, for example, the following formulae (III) and (IV)].

Thus, the epoxy functional group in the curing agent (B) in accordance with the present invention comprises an epoxy group selected from the group consisting of an epoxy group bonded directly to a ring carbon atom of an alicyclic ring or a bridged alicyclic ring and an epoxy group formed by two adjacent carbon atoms constituting the alicyclic ring or the bridged alicyclic ring and an oxygen atom.

As the specific examples of such epoxy functional group, what is represented by the following formulae (I) to (IV) may be cited.

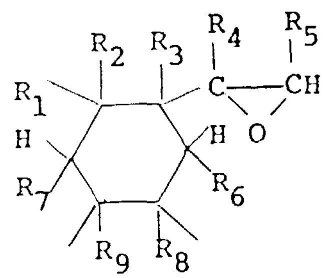

(I)

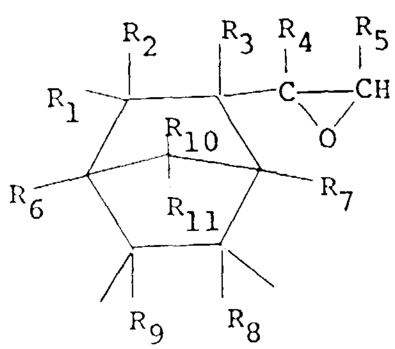

(II)

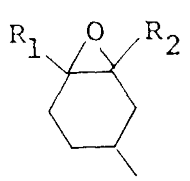

or

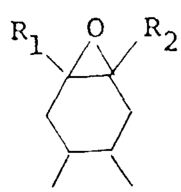

(III)

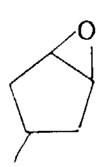

,

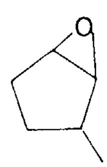

,

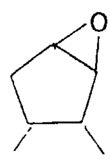

or

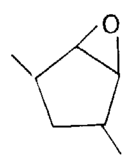

(IV)

wherein $R_1$, $R_2$, $R_3$, $R_5$, $R_6$, $R_7$, $R_{10}$ and $R_{11}$ each represent H, $CH_3$ or $C_2H_5$, and $R_4$, $R_8$ and $R_9$ each represent

H or $CH_3$.

The curing agent (B) used in the present invention may have at least 2, preferably at least 3, more preferably at least 4, epoxy functional groups selected from said formulae (I) to (IV) on average in one molecule. The epoxy functional groups in the curing agent (B) may be the same as or different from each other. The curing agent (B) may be used alone or in combination of two or more kinds thereof.

Of the epoxy functional group represented by said formula (I) or (III) is preferable, and especially, an epoxy functional group represented by the following formula (V)

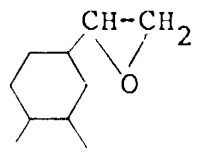

(V)

and an epoxy functional group represented by the following formula (VI) are preferable.

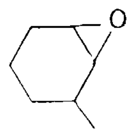

or

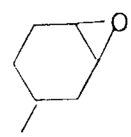

(IV)

Additionally, the epoxy equivalent and the molecular weight of the curing agent (B) used in the present invention are not strictly restricted, but are changeable according to a process for the production thereof and the required performance of the end coating composition. But, generally speaking, the epoxy equivalent may be within the range of usually 100 to 2,000, preferably 150 to 500, more preferably 150 to 250. And it is proper that the number average molecular weight is within the range of usually 400 to 100,000, preferably 700 to 50,000, more preferably 700 to 30,000.

The epoxy resin [the curing agent (B)] having at least 2 such epoxy functional groups on average per molecule is described in literatures such as, for example, Japanese Patent Publication No. 8016/1981 as well as Japanese Laid-Open Patent Publications Nos. 47365/1982, 166675/1985, 221121/1968 and 234028/1988, and what is known per se may be used.

Or said epoxy resin [the curing agent(B)] having said epoxy functional groups is obtained by processes known per se. The main processes for producing said epoxy resin will be enumerated hereinbelow, but the enumerated processes are not limitative.

A first process for the production:

A process for producing an epoxy resin having at least 2 epoxy functional groups on average per molecule which comprises epoxidating part of carbon-carbon double bonds of an alicyclic compound having said at least 2 carbon-carbon double bonds in one molecule, subjecting the resulting epoxy groups to a ring-opening polymerization, and thereafter epoxidating said double bonds remaining in the resulting polymer.

A second process for the production:

A process for subjecting an alicyclic compound having at least 2 epoxy groups in the same molecule to a ring-opening polymerization to such an extent as may not eliminate all of said epoxy groups on the basis of said epoxy groups.

A third process for the production:

A process for polymerizing a compound having an epoxy functional group and a polymerizable unsaturated bond in the same molecule.

A more specific explanation will be made with reference to these processes for the production hereinbelow.

<u>The first process for the production</u>:

This process comprises epoxidating part of carbon-carbon double bonds (a partial epoxidation product) contained in an alicyclic compound having at least 2 carbon-carbon double bonds in one molecule [hereinafter referred to as "the alicyclic compound (a)"], obtaining a ring-opened polymer of said partial epoxidation product by ring-opening polymerization of the resulting epoxy groups, and thereafter epoxidating part or whole of said double bonds remaining in said polymer to thereby obtain a curing agent (B).

The alicyclic compound (a) is a compound having a structure of an alicyclic ring or a bridged alicyclic ring mentioned above and at least 2 carbon-carbon double bonds, existing between 2 adjoining carbon atoms constituting the ring structure or between the other carbon atoms being directly bonded to said ring structure.

The alicyclic compound (a) may also be obtained by heating, for example, a conjugated diene compound by a known method. As such conjugated diene compound, an aliphatic or alicyclic compound having 4 to 30 carbon atoms and having at least 1 pair, preferably 1 to 5 pairs of conjugated double bonds in one molecule is suitable.

As required, when a conjugated diene compound is reacted under heating in the presence of a Ziegler catalyst, the alicyclic compound (a) is obtained. This reaction under heating may be carried out by a method known per se, for example, by a method disclosed in Japanese Laid-Open Patent Publication No. 102643/1974.

When typical examples of the so obtained alicyclic compound (a) are shown, they are as follows.

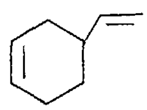 , 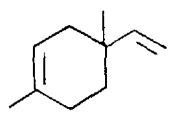 , 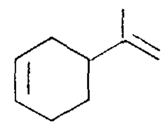 ,

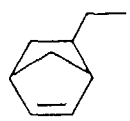 , 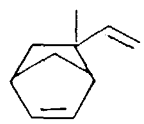 , 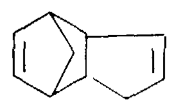 , 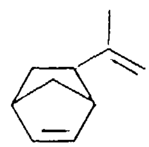 ,

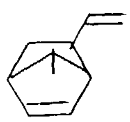 , 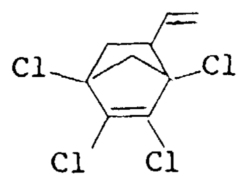 , 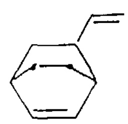 , etc.

At first, part of (at least 2) carbon-carbon double bonds contained in the alicyclic compound (a) is modified to epoxy groups with a peroxide and so forth (partial epoxidation). The partial epoxidation product is obtained by modifying part of a plurality of double bonds contained in said alicyclic compound (a) to epoxy groups.

A partial epoxidation product has at least l epoxy group and at least 1 carbon-carbon double bond in one molecule, and said double bond is required to exist between 2 adjoining carbon atoms constituting the ring or between the other carbon atoms directly bonded to said ring.

Next, based on epoxy groups in this partial epoxidation product, a ring-opening polymerization is carried out to obtain a polymer of the alicyclic compound (a). It is preferable to use a polymerization initiator for this ring-opening polymerization, and the terminal of the end product of the curing agent (B), a residue X by the initiator component(s) may be bonded, where X is a residue of an organic compound having active hydrogen. As an organic compound having active hydrogen which is a precursor of X, there may be cited, for example, alcohols, phenols, carboxylic acids, amines and thiols. Of these, as the alcohols, either one or monohydric alcohols or di- or higher polyhydric alcohols will do.

The aforesaid ring-opened polymer is obtained by ring-opening polymerizing epoxy groups contained in a partial epoxidation product alone or as required in the other epoxy compound made to be co-present with said partial epoxidation product to form an ether bond. The proportion of the other epoxy compound in a ring-opened polymer may be optionally selected in accordance with the object, but specifically, it is desirable to select said epoxy compound within such a range of proportion that the resulting ring-opened polymer may have at least 2, preferably at least 3, more preferably at least 4 double bonds derived from the alicyclic compound (a) which can be changed by epoxidation reaction to one or more kinds of said structural formulae (I) to (IV) on average per molecule of the resulting ring-opened polymer. It is preferable that the number average molecular weight of the so obtained (co)polymer is within the range of usually from 400 to 100,000, especially from 700 to 50,000, more especially 700 to 30,000.

It is generally preferable to carry out a ring-opening polymerization reaction in the presence of a catalyst.

Specific examples of the catalyst that can be used include amines such as methyl amine, ethyl amine, propyl amine

and piperazine; organic bases such as pyridines and imidazoles; organic acids such as formic acid, acetic acid and propionic acid; inorganic acids such as sulfuric acid and hydrochloric acid; alkali metal alcoholates such as sodium methylate; alkalis such as KOH and NaOH: Lewis acid or its complexes such as $BF_3$, $ZnCl_2$, $A1Cl_3$ and $SnCl_4$; and organometallic compounds such as triethyl aluminum, aluminum acetyl acetonate, titanium acetyl acetonate and diethyl zinc.

These catalysts may be used in amounts within the range of generally 0.001 to 10 % by weight, preferably 0.1 to 5 % by weight based on the reactant. The ring-opening polymerization temperature is within the range of generally about -70 to about 200°C, preferably about -30 to about 100°C. The reaction may be carried out in the presence of a solvent, and it is preferable to use an ordinary organic solvent not having active hydrogen as a solvent.

In the ring-opened polymer, there are double bonds derived from the alicyclic compound (a), and the curing agent (B) is obtained by epoxidating part or whole of said double bonds. Epoxidation of the double bonds may be carried out by using an epoxidation agent such as, for example, peroxy acids and hydroperoxides. Whether a solvent should be used or not and the reaction temperature in the epoxidation reaction may be properly adjusted according to the apparatus used and the physical properties of the starting material. Depending on the conditions of the epoxidation reaction, simultaneous with epoxidation of the double bonds in the ring-opened polymer as a starting material, a side reaction occurs and the modified substituent may be contained in the skeleton of the epoxy resin sometimes. As such modified substituent, when, for example, peracetic acid is used as the epoxidation agent, a substituent of the following structure may be cited, which is considered to be attributable to reaction of the produced epoxy group with the by-produced acetic acid.

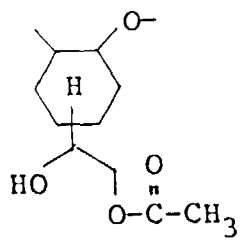

The ratio at which these substituents are contained in said skeleton is determined according to the kind of the epoxidation agent, the molar ratio of the epoxidation agent to the unsaturated bond and the reaction conditions.

The epoxy equivalent of the so obtained curing agent (B) is preferably within the range of generally 100 to 2,000, especially 150 to 500, more especially 150 to 250.

As such curing agent (B), what is commercially available may also be used, and as such merchandise, for example, EHPE-3150, EHPE-3100 and EHPE-1150 (trade names of products of Daicel Chemical Industries, Ltd.) may be cited. These are epoxy resins of the following structural formula having cyclohexene skeletons using vinylcyclohexene-1-oxide as a partial epoxidation product for their production.

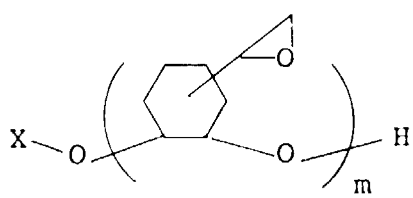

wherein m is at least 2, preferably at least 3, more preferably at least 4, and X represents a residue of an initiator component.

<u>The second process for the production</u>:

According to this process, the objective epoxy resin is obtained by, for example, epoxidating at least 2 double bonds of the double bonds contained in said alicyclic compound (a), and thereafter subjecting said compound (a) to a ring-opening polymerization in such a manner as to retain the resulting epoxy groups.

As said epoxidation product having at least 2 epoxy groups on average per molecule, the following monocyclic or condensed ring-type compounds may be shown as typical examples.

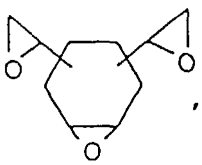 , 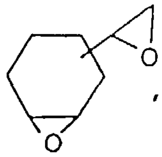 , 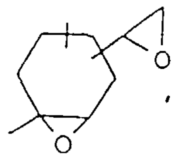 , 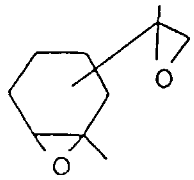 , 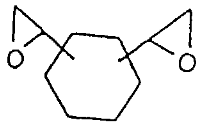

(For example, a product under a trade name of "Celoxide" of Daicel Chemical Industries, Ltd. may be cited),

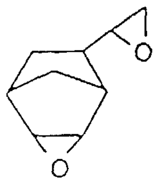 , 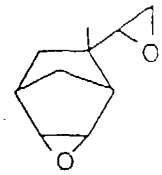 , 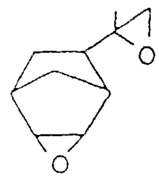 , 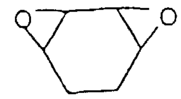 ,

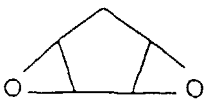 , 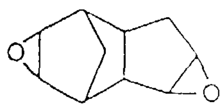 , 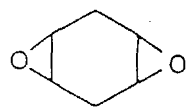 .

Specifically, at least one kind of said epoxy compound is subjected to a ring-opening polymerization, as required in the presence of a polymerization initiator and a catalyst in the same way as in the first process for the production mentioned above and the reaction is suspended at the predetermined reaction stage in which epoxy groups are remaining to thereby obtain the curing agent (B). For suspending the reaction, optional means such as dilution with a solvent and cooling may be used. In this process for the production, said other epoxy compound may be copolymerized as in said first process for the production as well.

The so obtained curing agent (B) may be an epoxy resin having at least one kind of the epoxy functional group shown by said formula (I) or (II) and at least one kind of the epoxy functional group shown by said formula (III) or (IV) in the same molecule or different molecules.

The so obtained ring-opened polymer [the curing agent (B)] preferably has a number average molecular weight within the range of generally 400 to 100,000, especially 700 to 50,000 and conveniently has an epoxy equivalent within the range of generally 100 to 2,000, especially 150 to 500, more especially 150 to 250.

<u>The third process for the production</u>:

As a compound having at least one epoxy functional group and a polymerizable unsaturated bond in the same molecule (which may be hereinafter referred to as "a polymerizable epoxy monomer"), there may be cited, for example, what is represented by the following general formulae ① to ④.

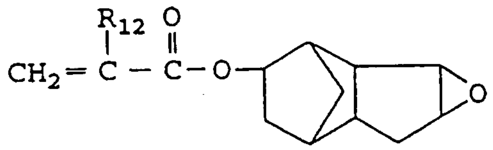

①

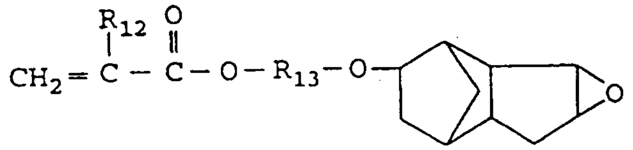

②

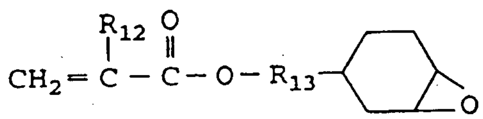

③

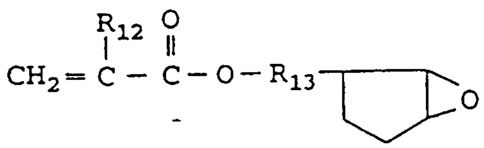

④

In said general formulae, $R_{12}$ represents a hydrogen atom or a methyl group, and $R_{13}$ represents a divalent aliphatic saturated hydrocarbon group having 1 to 6 carbon atoms.

In the aforesaid copolymerizable epoxy monomers, as a divalent aliphatic saturated hydrocarbon group having 1 to 6 carbon atoms represented by $R_{13}$, there may be cited a straight chain linear or branched chain alkylene group such as, for example, methylene, ethylene, propylene, tetramethylene, ethylethylene, pentamethylene and hexamethylene.

Specific examples of the polymerizable epoxy monomers represented by the aforesaid general formulae ① to ④ include 3,4-epoxycyclohexylmethyl acrylate and 3,4-epoxycyclohexylmethyl methacrylate. Further, 4-vinylcyclohexene oxide may also be used as a polymerizable epoxy monomer.

The curing agent (B) may be produced by polymerizing one or more monomers selected from these polymerizable epoxy monomers, and at this time, it is also possible to copolymerize the other polymerizable unsaturated monomer.

As said the other polymerizable unsaturated monomer, it may be selected from a broad range according to the properties desired of the resulting (co)polymer. Typical examples of such other polymerizable unsaturated monomer include the following compounds.

(a) Acrylic acid or methacrylic acid esters: for example, alkyl esters having 1 to 18 carbon atoms of acrylic acid or methacrylic acid such as methyl acrylate, ethyl acrylate, propyl acrylate, isopropyl acrylate, butyl acrylate, hexyl acrylate, octyl acrylate, lauryl acrylate, methyl methacrylate, ethyl methacrylate, propyl methacrylate, isopropyl methacrylate, butyl methacrylate, hexyl methacrylate, octyl methacrylate and lauryl methacrylate; and hydroxyalkyl esters having 2 to 8 carbon atoms of acrylic acid or methacrylic acid such as 2-hydroxyethyl acrylate, 2-hydroxyethyl methacrylate, hydroxypropyl acrylate and hydroxypropyl methacrylate.

(b) Vinyl aromatic compounds: for example, styrene, alpha-methyl styrene, vinyl toluene and p-chlorostyrene.

(c) Polyolefin type compounds, for example, butadiene, isoprene and chloroprene.

(d) Others: acrylonitrile, methacrylonitrile, vinyl acetate VEOBA monomer (a product of Shell Chemicals) and a compound having a polycaprolacton chain (for example, FM-3X monomer, a trade name of a product of Daicel Chemical Industries, Ltd.).

The ratio of the polymerizable epoxy monomer to the other polymerizable unsaturated monomer may be optionally

selected according to the object, within such a range as to enable the curing agent (B) obtained by these copolymerization reactions to contain at least 2, preferably at least 3, more preferably at least 4 epoxy functional groups on average per molecule. But in order to invest the resulting polymer with sufficient curability, it is especially preferable to make the content of the polymerizable epoxy monomer in the solids content of said curing agent (B) within the range of 5 to 100 % by more preferably 20 to 100 % by weight.

Said third process for the production of the curing agent (B) may be carried out in the same manner as the polymerization reaction of ordinary acryl or vinyl resin monomers. As one of such polymerization reactions, a process which comprises dissolving or dispersing the respective monomer components in an organic solvent, and heating the resulting solution or dispersion at a temperature of about 60 to 180°C with stirring in the presence of a radical polymerization initiator, may be shown. The reaction time may be normally about 1 to 10 hours. As the organic solvent, alcohol solvents, ether solvents, ester solvents and hydrocarbon solvents may be used. When the hydrocarbon solvent is used, it is preferable to use another co-solvent together with it from the stand-point of the solubility. Further, all of usually used radical polymerization initiators may be used. As the specific examples of such radical initiator, there may be exemplified peroxides such as benzoyl peroxide and t-butyl peroxy-2-ethyl hexanoate; and azo compounds such as azobisisobutyronitrile and azobisdimethylvaleronitrile.

It is preferable that the curing agent (B) obtained by said third process for the production has a number average molecular weight within the range of generally about 3,000 to about 100,000, especially 4,000 to 10,000.

Of the aforesaid curing agent (B), the epoxy resin is most suitable having at least 3 epoxy functional groups, more preferably at least 4 such groups, most preferably at least 5 such groups, on average per molecule, having an epoxy equivalent within the range of preferably 100 to 2,000, more preferably 150 to 500, especially preferably 150 to 250, and a number average molecular weight within the range of preferably 400 to 100,000, more preferably 700 to 50,000, especially preferably 750 to 30,000.

The amount to use the curing agent (B) is properly changeable according to the kind of the base resin (A) used and within the range from the minimum amount enough to cure the resulting coating film thermally to the maximum amount not hurt the bath stability, but generally it is desirably within such a range that the weight ratio of the solids content of the curing agent (B) to the base resin (A) becomes 0.2 to 1, especially 0.25 to 0.85, more desirably 0.25 to 0.65.

The base resin (A) to which a part of the curing agent has been bonded by an addition reaction in advance may be contained in the composition of the present invention.

<u>Imidazole compound (C)</u>:

The imidazole compound (C) is a component which acts as a catalyst for a curing reaction of the base resin (A) with the curing agent (B) or a curing agent of the curing agent (B).

The imidazole compound (C) is an imidazole compound having a molecular weight of 68 to 300 per imidazole ring. In the case of one imidazole ring, the molecular weight has to fall in a range of 68 to 300, preferably 100 to 250, and when the imidazole compound (C) has, for example, two imidazole rings, the molecular weight has to fall in a range of 136 to 600. Further, the above imidazole compound (C) has preferably 1 to 2 imidazole rings in one molecule.

Specific examples of such imidazole compound (C) include compounds having one imidazole ring in one molecule, such as imidazole, 2-methylimidazole, 2-ethyl-4-methylimidazole, 2-undecylimidazole, 2-heptadecylimidazole, 2-phenylimidazole, 2-phenyl-4-methylimidazole, 1-benzyl-2-methylimidazole, 2-ethylimidazole, 2-isopropylimidazole, 2-phenyl-4-benzylimidazole, 1-cyanoethyl-2-methylimidazole, 1-cyanoethyl-2-ethyl-4-methylimidazole, 1-cyanoethyl-2-undecylimidazole, 1-cyanoethyl-2-isopropylimidazole, 1-cyanoethyl-2-phenylimidazole, 2,4-diamino-6-[2'-methylimidazolyl-(1)']-ethyl-s-triazine, 2,4-diamino-6-[2'-ethyl-4-methylimidazolyl-(1)']-ethyl-s-triazine, 2-methylimidazolium isocyanuric acid adduct, 2-phenylimidazolium isocyanuric acid adduct, 1-aminoethyl-2-methylimidazole, 2-phenyl-4,5-dihydroxymethylimidazole, 2-phenyl-4-methyl-5-hydroxymethylimidazole and 2-phenyl-4-benzyl-5-hydroxymethylimidazole; and compounds having two or more imidazole rings in one molecule obtained by condensing hydroxymethyl group-containing imidazole compounds such as 2-phenyl-4,5-dihydroxymethylimidazole, 2-phenyl-4-methyl-5-hydroxymethylimidazole and 2-phenyl-4-benzyl-5-hydroxymethylimidazole each described above by dehydration or deformaldehyde reaction, for example, 4,4'-methylene-bis-(2-ethyl-5-methylimidazole). These compounds can be used alone or in combination of two or more kinds thereof.

Among them, particularly suitable are 2-ethyl-4-methylimidazole, 2-undecylimidazole, 2-heptadecylimidazole, 2-phenylimidazole and 2-phenyl-4-methylimidazole.

The amount of the imidazole compound (C) blended in the coating composition of the present invention can be changed over a wide range according to the kind thereof, the kinds of the base resin (A) and/or the curing agent (B) described above and the curing conditions of a coated film to be formed. In general, the blended amount falls suitably in a range of 0.1 to 10 parts by weight, particularly 0.3 to 6 parts by weight and more particularly 0.5 to 3 parts by weight per 100 parts by weight of the total of the base resin (A) and the curing agent (B).

In the coating composition of the present invention, the base resin (A) and the imidazole compound (C) are neutralized with acids to form a neutralized product, and these neutralized products and the epoxy group-containing curing agent (B) are stably dispersed in an aqueous medium.

The acid used for the neutralization described above includes, for example, mineral acids such as hydrochloric acid, sulfuric acid and phosphoric acid; and organic acids such as acetic acid, formic acid, propionic acid, trimethylacetic acid, acrylic acid, methacrylic acid, lactic acid, hydroxyacetic acid. crotonic acid, monochloroacetic acid, monoethyl maleate, monoethyl fumarate and monomethyl itaconate. These neutralizing agents can be used alone or in a mixture of two or more kinds thereof.

The degree of the neutralization of the base resin (A) and the imidazole compound (C) with an acid falls usually in a range of 0.2 to 1.2, particularly 0.3 to 1.1 and more particularly 0.5 to 1 in terms of a neutralization equivalent based on each of the cationizable groups contained in the base resin (A) and the imidazole rings contained in the imidazole compound or the total of the both.

Preparation of the electrodepositable coating composition of the present invention:

A preparation process for the electrodepositable coating composition of the present invention is not specifically restricted as long as the electrodepositable coating composition in which the neutralized product of the base resin (A), the curing agent (B) and the neutralized product of the imidazole compound (C) are stably dispersed in an aqueous medium over a long period of time is obtained. The stability of the coating composition of the present invention is generally better in a dispersion in which emulsion particles containing together the neutralized product of the base resin (A) and the curing agent (B) and the dispersed particles of the neutralized product of the imidazole compound (C) are present independently of each other in comparison with a dispersion in which the neutralized product of the base resin (A), the curing agent (B) and the neutralized product of the imidazole compound (C) are contained altogether in individual emulsion particles, and therefore the former type dispersion is preferred.

One process for preparing the electrodepositable coating composition of the present invention comprises mixing the base resin (A) with the curing agent (B) and neutralizing the mixture with an acid to thereby prepare resin emulsion particles in which the base resin (A) and the curing agent (B) are dispersed together in an aqueous medium, separately neutralizing the imidazole compound (C) with an acid to disperse it in an aqueous medium to thereby prepare dispersed particles of the imidazole compound (C) in which the imidazole compound (C) is stably dispersed in the aqueous medium and then mixing the resin emulsion described above and the preceding dispersion of the imidazole compound (C), if necessary, with a color pigment such as carbon black, titanium white, white lead, lead oxide and red iron oxide; an extender pigment such as clay and talc; an anticorrosive pigment such as strontium chromate, lead chromate, basic lead chromate, red lead, lead silicate, basic lead silicate, lead phosphate, basic lead phosphate, lead tripolyphosphate, lead silico-chromate, chrome yellow, lead cyanamide, calcium plumbate, lead suboxide, lead sulfate and basic lead sulfate; or further with other additives. Other additives which may be mixed include, for example, nonionic surfactants as dispersants or cissing inhibitors, UV absorbers and anti-oxidants.

In the preparation process described above, the resin emulsion can be prepared as well by neutralizing the base resin (A) in advance with an acid and mixing the neutralized product of the base resin (A) with the curing agent (B) to disperse the mixture in an aqueous medium.

The aqueous medium capable of being used in the composition of the present invention includes water or a mixture of water and a water miscible organic solvent. The above aqueous medium can contain water of 50 % by weight or more, preferably 80 % by weight or more.

The water miscible organic solvent described above includes, for example, N-methylpyrrolidone, ethylene glycol monoethyl ether, ethylene glycol monobutyl ether, butyrolactone, ethanol, isopropanol, n-butanol, acetone and diethylene glycol monoethyl ether.

Further, according to the present invention, the coating composition of the present invention can be produced as well by preparing the first emulsion particles obtained by stably dispersing the neutralized product of the base resin (A) with an acid and the neutralized product of the imidazole compound (C) with an acid together in an aqueous medium, separately preparing the second emulsion particles obtained by stably dispersing the neutralized product of the base resin (A) with an acid and the curing agent (B) together in an aqueous medium and then mixing the first emulsion particles and the second emulsion particles, if necessary, with the color pigment, the extender pigment, the anti-corrosive pigment or other additives as described above. This process makes it possible to prepare the electrodepositable coating composition having an excellent stability over further longer period of time as compared with the coating composition prepared by the process described previously.

The first emulsion particles described above can be prepared, for example, by mixing the base resin (A), the imidazole compound (C) and an acid used for neutralizing both of them in an aqueous medium to neutralize and disperse them, or neutralizing in advance the base resin (A) and the imidazole compound (C) respectively with the acid and mixing the neutralized product of the base resin (A) with the neutralized product of the imidazole compound (C) together in the aqueous medium to disperse them. The degree of the neutralization of the base resin (A) and the imidazole compound (C) with an acid falls preferably, as described previously, in a range of usually 0.2 to 1.2, particularly 0.3 to 1.1 and more particularly 0.5 to 1 in terms of a neutralization equivalent based on each of the cationizable groups contained in the base resin (A) and the imidazole rings contained in the imidazole compound or the total of the both. The mixing proportion of the base resin (A) to the imidazole compound (C) in the first emulsion particles shall not strictly be restricted and can be changed over a wide range according to the kinds of the base resin (A) and the imidazole compound (C). It falls usually in a range of 100/0.1 to 100/20, preferably 100/0.3 to 100/15 and more preferably 100/0.5 to 100/5 in terms of a solid content weight ratio (A)/(C).

The second emulsion particles can be prepared, for example, by mixing the neutralized product of the base resin (A) with an acid with the curing agent (B) in an aqueous medium and dispersing them. The degree of the neutralization of the base resin (A) with an acid can be set to the same degree as described previously. The base resin (A) may be neutralized with an acid either before or after mixed with the curing agent (B).

The mixing proportion of the base resin (A) to the curing agent (B) in the second emulsion particles shall not strictly be restricted as well and can be changed over a wide range according to the kinds of the base resin (A) and the curing agent (B). It falls usually in a range of 100/20 to 100/200, preferably 100/50 to 100/150 and more preferably 100/80 to 100/120 in terms of a solid content weight ratio (A)/(B).

The mixing proportion of the first emulsion particles to the second emulsion particles in the coating composition of the present invention shall not strictly be restricted and can be changed over a wide range according to the performances required to the finished coating composition. It is preferably controlled so that in the total of the first emulsion particles and the second emulsion particles, the solid content weight ratio of the curing agent (B) to the base resin (A) falls in a range of 0.2 to 1.0, particularly 0.25 to 0.85 and more particularly 0.25 to 0.65, and the solid content weight ratio of the imidazole compound (C) to the total solid matter amount of the base resin (A) and the curing agent (B) falls in a range of 0.0005 to 0.10, particularly 0.001 to 0.05 and more particularly 0.002 to 0.03.

The coating composition of the present invention thus prepared can be cationically electrodeposited on a support having at least a conductive surface. A method of forming an electrodeposited coating film on the substrate using a cationically electrodepositable coating composition of the present invention is not particularly restricted, but ordinary conditions for cationically electrodepositing may be used. For example, the coating composition is optionally diluted to the concentration of the solids content of the bath within the range of 5 to 40 % by weight, preferably 10 to 25 % by weight, and the bath pH is adjusted within the range of 5 to 8, preferably 5.5 to 7. Next, using this electrodeposition bath, electrodeposition is carried out under the following conditions with, for example, a carbon plate (5 cm x 15 cm x 1 cm) being used as an anode and for example, a zinc phosphated steel (5 cm x 15 cm x 0.7 mm) being used as a cathode.

| | |
|---|---|
| Bath temperature: | 20 to 35°C, preferably 25 to 30°C |
| Direct current | |
| Current density: | 0.005 to 2 $A/cm^2$, preferably 0.01 to 1 $A/cm^2$ |
| Voltage: | 10 to 500 V, preferably 100 to 300 V |
| Power feeding time: | 0.5 to 5 min., preferably 2 to 3 min. |

After the electrodeposition coating, the coated object is drawn up from the electrodeposition bath, rinsed with water, and then cured thermally by heating.

The thickness of a coating film obtained by electrodepositing the cationically electrodepositable coating composition on the substrate is not strictly restricted, however, generally, the thickness within the range of 3 to 300 microns, preferably 5 to 50 microns, based on the cured paint film is suitable, and the coating film can be cured with heating at a temperature of, for example, 70 to 250°C, preferably 120 to 160°C.

Hereinbelow, the present invention will be explained more specifically by examples. All parts and percentages in the following examples are by weight.

<u>Production of resin (A) having a hydroxyl group and a cationizable group</u>:

<u>Production Example 1</u>

Reacted at 160°C for 5 hours was a mixture comprising 155 parts of EHPE 3150 (*1), 70 parts of diethanolamine and the whole amount of a reaction product obtained by mixing in advance 475 parts of bisphenol A diglycidyl ether having an epoxy equivalent of 190, 285 parts of bisphenol A, 53 parts of diethanolamine and 80 parts of carbitol and maintaining them at 130°C for 3 hours to react them, and then 692 parts of methylpropanol were added, whereby a cationizable resin liquid (A-1) having a solid content of 60 %, an amine value of 63 KOH mg/g and a primary hydroxyl group equivalent of 443 was obtained.

(*1) EHPE 3150: an epoxy resin manufactured by Daicel Chemical Ind. Co., Ltd., with an epoxy equivalent of about 175 to 195 having a repetitive unit shown by the following formula:

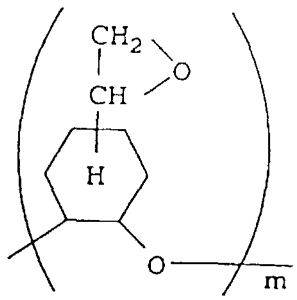

wherein m represents an integer of 2 or more.

Production of epoxy group-containing curing agent (B):

Production Example 2

A solution obtained by dissolving 2 parts of dimethylvaleronitrile in 33.4 parts of 3,4-epoxycyclohexylmethyl methacrylate was dropwise added to a mixed solution of 10 parts of methyl isobutyl ketone and 10 parts of butyl cellosolve maintained at 100°C in 2 hours. After aging for one hour, the temperature was elevated to 125°C, and aging was further continued for one hour at 125°C, whereby a curing agent solution (B-2) having a solid content of 60 % was obtained. This curing-agent resin had an epoxy equivalent of 196.

Production Example 3

Reacted at 120°C for 3 hours were 14.5 parts of Duranate TPA-100 (brand name, manufactured by Asahi kasei Co., Ltd., isocyanurate compound of hexamethylenediisocyanate, isocyanate equivalent: 185) and 10.5 parts of 3,4-epoxytetrahydrobenzyl alcohol (manufactured by Daicel Chemical Ind. Co., Ltd., epoxy equivalent: 135), and 6.3 parts of methylpropanol was added after confirming that the isocyanate value was 0, whereby a curing agent solution (B-3) having a solid content of 80 % was obtained. This curing agent resin had a number average molecular weight of 970 and an epoxy equivalent of 325.

Production of resin emulsions:

Production Example 4

Added to 100 parts of the 60 % cationizable resin solution (A-1) described above were 37.5 parts of EHPE-3150 solution [curing agent solution (B-1)] having a solid content of 80 % dissolved in ethyl cellosolve and 0.7 part of formic acid, and then 312 parts of deionized water was added while stirring sufficiently, whereby a resin emulsion (E-1) having a solid content of 20 %, a pH of 6.5 and an emulsion particle diameter of 0.10 μm was obtained. Separation and settling of the emulsion and an increase in the particle diameter were not observed even after leaving this emulsion (E-1) for standing at 30°C for one month.

Production Example 5

Added were 100 parts of the preceding cationic resin solution (A-1) having a solid content of 60 %, 50 parts of the curing agent solution (B-2) described above and 0.53 part of formic acid, and 299 parts of deionized water was added while stirring sufficiently, whereby an emulsion (E-2) having a solid content of 20 %, a pH of 6.6 and an emulsion particle diameter of 0.04 μm was obtained. Separation and settling of the emulsion and an increase in the particle diameter were not observed even after leaving this emulsion for standing at 30°C for one month.

Production Example 6

Mixed were 100 parts of the preceding cationizable resin solution (A-1) having a solid content of 60 %, 37.5 parts of the curing agent solution (B-3) described above and 0.7 part of formic acid, and 312 parts of deionized water was

added while stirring sufficiently, whereby an emulsion (E-3) having a solid content of 20 %, a pH of 6.6 and an emulsion particle diameter of 0.09 μm was obtained. Separation and settling of the emulsion and an increase in the particle diameter were not observed even after leaving this emulsion (E-3) for standing at 30°C for one month.

Production of the dispersion of the neutralized product of the imidazole compound (C):

Production Example 7

One part of 10 % formic acid aqueous solution (the amount of formic acid to the imidazole compound corresponds to a neutralization equivalent of 0.5) obtained by dissolving 0.1 part of formic acid in 0.9 part of water and 3.5 parts of water were added to 1 part of 2-undecylimidazole and stirred to obtain an imidazole compound-neutralized dispersion (C-1). This dispersion (C-1) was a homogeneous and cloudy colloidal dispersion having a solid content of about 20 %.

Production Example 8

A 10 % acetic acid aqueous solution 4.2 parts (the amount of acetic acid to the imidazole compound corresponds to a neutralization equivalent of 1.0) and 1.9 parts of water were added to 1 part of 2-phenylimidazole and stirred to obtain an imidazole compound-neutralized dispersion (C-2). This dispersion (C-2) was a homogeneous and cloudy colloidal dispersion having a solid content of about 20 %.

Production Example 9

A 10 % formic acid aqueous solution 8.4 parts (the amount of formic acid to the imidazole compound corresponds to a neutralization equivalent of 1.0) was added to 1 part of 2,4-diamino-6-[2'-methylimidazolyl-(1)']ethyl-s-triazine and stirred to obtain an imidazole compound-neutralized dispersion (C-3). This dispersion (C-3) was a homogeneous and cloudy colloidal dispersion having a solid content of about 20 %.

Production Example 10

A 10 % acetic acid aqueous solution 10.3 parts (the amount of acetic acid to the imidazole compound corresponds to a neutralization equivalent of 2.0) was added to 1 part of 4,4'-methylene-bis-(2-ethyl-5-methylimidazole) and stirred to obtain an imidazole compound-neutralized dispersion (C-4). This dispersion (C-4) was a homogeneous and cloudy colloidal dispersion having a solid content of about 20 %.

Production of resin emulsions:

Production Example 11 (production of first emulsion particles)

Added to 8.3 parts of the 60 % cationizable resin solution (A-1) described above were 1 part of 2-phenylimidazole and 0.1 part of formic acid, and 20.6 parts of deionized water was added while stirring sufficiently, whereby a first emulsion particle dispersion (E-1-1) having a solid content of 20 %, a pH of 6.5 and an emulsion particle diameter of 0.1 μm was obtained.

Production Example 12 (production of first emulsion particles)

Added to 8.3 parts of the 60 % cationizable resin solution (A-1) described above were 2 parts of 2-undecylimidazole and 0.15 part of formic acid, and 20.55 parts of deionized water were added while stirring sufficiently, whereby a first emulsion particle dispersion (E-1-2) having a solid content of 20 %, a pH of 6.0 and an emulsion particle diameter of 0.05 μm was obtained.

Production Example 13 (production of second emulsion particles)

Added were 62.5 parts of the curing agent solution (B-1) having a solid content of 80 % dissolved in ethyl cellosolve described previously, 75 parts of the 60 % cationizable resin solution (A-1) described above and 0.6 part of formic acid, and then 336.9 parts of deionized water were added while stirring sufficiently, whereby a second emulsion particle dispersion (E-2-1) having a solid content of 20 %, a pH of 6.6 and an emulsion particle diameter of 0.05 μm was obtained.

Production Example 14 (production of second emulsion particles)

Added were 75 parts of the 60 % cationizable resin solution (A-1) described above, 62.5 parts of the curing agent solution (B-3) having a solid content of 80 % obtained in Production Example 2 described above and 0.5 part of formic acid, and then 337 parts of deionized water was added while stirring sufficiently, whereby a second emulsion particle dispersion (E-2-2) having a solid content of 20 %, a pH of 6.3 and an emulsion particle diameter of 0.1 μm was obtained.

Production of cationically electrodepositable coating composition:

Example 1

Added were 100 parts of the cationizable resin solution (A-1) obtained in Production Example 1 described previously, 50 parts of titanium white, 50 parts of clay, 3.0 parts of formic acid and 55 parts of deionized water, and were kneaded. Then, 800 parts of glass beads was added and dispersed by means of a paint shaker, and the glass beads were removed to obtain a pigment dispersion (P-1) having a solid content of about 62 %.

Mixed were 1,000 parts of the resin emulsion (E-1) obtained in Production Example 4 described previously, 5 parts of the dispersion (C-1) obtained in Production Example 7 described previously and 90 parts of the pigment dispersion (P-1) described above, and the mixture was diluted with deionized water to obtain "cationically electrodepositable coating-1" having a pH of 6.6 and a solid content of about 20 %.

Example 2

The same procedure as in Example 1 was repeated to obtain "cationically electrodepositable coating-2" having a pH of 6.5 and a solid content of about 20 %, except that 5 parts of the dispersion (C-2) obtained in Production Example 8 described previously were substituted for 5 parts of the dispersion (C-1) in Example 1.

Example 3

The same procedure as in Example 1 was repeated to obtain "cationically electrodepositable coating-3" having a pH of 6.5 and a solid content of about 20 %, except that 5 parts of the dispersion (C-3) obtained in Production Example 9 described previously were substituted for 5 parts of the dispersion (C-1) in Example 1.

Example 4

Added were 100 parts of the cationizable resin solution (A-1) obtained in Production Example 1 described previously, 30 parts of titanium white, 60 parts of clay, 3.0 parts of formic acid and 61 parts of deionized water, and were kneaded. Then, 1,000 parts of glass beads was added and dispersed by means of the paint shaker, and the glass beads were removed to obtain a pigment dispersion (P-2) having a solid content of about 59 %.

Mixed were 1,000 parts of the resin emulsion (E-2) obtained in Production Example 5 described previously, 10 parts of the dispersion (C-4) obtained in Production Example 10 described previously and 70 parts of the pigment dispersion (P-2) described above, and the mixture was diluted with deionized water to obtain "cationically electrodepositable coating-4" having a pH of 6.4 and a solid content of about 20 %.

Example 5

Added were 100 parts of the cationizable resin solution (A-1) obtained in Production Example 1 described previously, 10 parts of titanium white, 10 parts of clay, 3.0 parts of formic acid and 37 parts of deionized water, and were kneaded. Then, 500 parts of glass beads was added and dispersed by means of the paint shaker, and the glass beads were removed to obtain a pigment dispersion (P-3) having a solid content of about 50 %.

Mixed were 1,000 parts of the resin emulsion (E-3) obtained in Production Example 6 described previously, 20 parts of the dispersion (C-1) obtained in Production Example 7 described previously and 70 parts of the pigment dispersion (P-3) described above, and the mixture was diluted with deionized water to obtain "cationically electrodepositable coating-5" having a pH of 6.7 and a solid content of about 20 %.

Comparative Example 1

The same procedure as in Example 1 was repeated to obtain "cationically electrodepositable coating-6" having a

pH of 6.2 and a solid content of about 20 %, except that 5 parts of the dispersion (C-1) obtained in Production Example 7 described previously were not compounded in Example 1.

Comparative Example 2

The same procedure as in Example 1 was repeated to obtain "cationically electrodepositable coating-7" having a pH of 6.1 and a solid content of about 20 %, except that 20 parts of a lead acetate aqueous solution having a solid content of 20 % were substituted for the dispersion (C-1) obtained in Production Example 7 described previously in Example 1.

Comparative Example 3

Mixed were 1,000 parts of the resin emulsion (E-1) obtained in Production Example 4 described previously, 1 part of 2-undecylimidazole and 90 parts of the pigment dispersion (P-1) described above, and the mixture was diluted with deionized water and heated at 80°C for one hour to dissolve 2-undecylimidazole, whereby "cationically electrodepositable coating-8" having a pH of 6.7 and a solid content of about 20 % was obtained.

Comparative Example 4

The same procedure as in Comparative Example 3 was repeated to obtain "cationically electrodepositable coating-9" having a pH of 6.7 and a solid content of about 20 %, except that 1 part of 2-phenylimidazole was substituted for 1 part of 2-undecylimidazole in Comparative Example 3.

Example 6

The second emulsion particle dispersion (E-2-1) 475 parts having a solid content of 20 % obtained in Production Example 13 described previously was mixed with 30 parts of the first emulsion particle dispersion (E-1-1) having a solid content of 20 % obtained in Production Example 11 described previously and stirred to obtain a「cationically electrodepositable coating-10」having a pH of 6.1 and a solid content of about 20 %.

Example 7

475 parts of the second emulsion particle dispersion (E-2-2) having a solid content of 20 % obtained in Production Example 14 described previously were mixed with 35 parts of the first emulsion particle dispersion (E-1-2) having a solid content of 20 % obtained in Production Example 12 described previously and stirred to obtain "cationically electrodepositable coating-11" having a pH of 6.3 and a solid content of about 20 %.

Example 8

475 parts of the second emulsion particle dispersion (E-2-1) having a solid content of 20 % obtained in Production Example 13 described previously, 7.1 parts of the pigment dispersion (P-1) obtained in Example 1 described previously and 14.9 parts of deionized water were mixed with 30 parts of the first emulsion particle dispersion (E-1-1) having a solid content of 20 % obtained in Production Example 11 described previously and stirred to obtain "cationically electrodepositable coating-12" having a pH of 6.1 and a solid content of about 20 %.

Tests of a gel fraction ratio of the coating film, an elongation ratio and an adhesiveness of the coating film, a coated film hardness and a coating stability against open stirring were carried out for the electrodepositable coatings obtained in Examples 1 to 8 and Comparative Examples 1 to 4 according to the following test methods. The test results are shown in the following Table 1 and Table 2.

Preparation of coated test plates:

(1) A gel fraction ratio and an elongation of the coating film were determined using coated tin plates obtained by cationically electrodepositing the respective electrodepositable coatings on tin plates on a condition of an applied voltage of 150 V so that the coating films had a thickness of about 20 μm and baking them at 200°C for 20 minutes after washing with water.

(2) An adhesiveness and a hardness of the coating film were determined using coated cold rolled steel sheets obtained by cationically electrodepositing the respective electrodepositable coatings on cold rolled steel sheets on a condition of an applied voltage of 170 V so that the coating films had a thickness of about 20 μm and baking them

at 200°C for 20 minutes after washing with water.

Test methods:

Gel fraction ratio: a coating film peeled from the coated tin plate was put in a stainless steel-made network vessel of 300 mesh and extracted in a solvent of acetone/methanol = 1/1 at a refluxing temperature for 6 hours, and then the gel fraction ratio was calculated according to the following equation:

$$\text{Gel fraction ratio} = (\text{coating film weight after extraction}) / (\text{coating film weight before extraction}) \times 100$$

Elongation of coating film: a coating film peeled from the coated tin plate was cut to a width of 5 mm and a length of 20 mm, and the cut coating film was measured for an elongation by means of an autograph (manufactured by Shimazu Manufacturing Co., Ltd.) on the conditions of a temperature of 20°C and a pulling speed of 20 m/minute, wherein the elongation of the coating film is a proportion (%) of a coating film length observed when the coating film was broken to an original length thereof.

Adhesiveness: the initial coated cold rolled steel sheets and the coated cold rolled steel sheets immersed in boiling water of about 100°C for 30 minutes were subjected to an adhesiveness of the coating films. The adhesiveness test was carried out according to JIS K-5400 8.5.2 (1990) cross-cut tape method, wherein cuts reaching the substrate were given to the coating films to form 100 squares of 1 mm × 1 mm; a cellophane adhesive tape was adhered on the surface thereof; and the number of the cross-cuts remaining without peeling off after suddenly peeling the adhesive tape was observed. The number of 100 means that peeling of the coating film is not observed and the adhesive strength is excellent.

Coating film hardness: the coating films on the coated cold rolled steel sheets were subjected to a pencil scratching test prescribed in JIS K-5400 8.4.2 (1990) and evaluated by breakage of coating film.

Coating stability: the electrodepositable coating compositions were held at 30°C while stirring for one week covering with an aluminum foil, and then the conditions of the electrodepositable coating compositions were investigated. The compositions in which a large change was not observed in a coating condition were marked by ○, and the compositions in which an abnormal change in a coating condition was observed were marked by X.

Table 1

| | Gel fraction ratio (%) | Coating film elongation (%) | Adhesiveness | | Coating film hardness (pencil) | Coating stability |
|---|---|---|---|---|---|---|
| | | | Initial | After dipping in boiling water | | Open stirring, 30°C, one week |
| Example 1 | 98.0 | 4.0 | 100 | 100 | 3H | ○ |
| Example 2 | 99.5 | 6.0 | 100 | 100 | 3H | ○ |
| Example 3 | 98.1 | 4.2 | 100 | 100 | 3H | ○ |
| Example 4 | 99.8 | 3.0 | 100 | 100 | 4H | ○ |
| Example 5 | 99.8 | 4.0 | 100 | 100 | 2H | ○ |
| Comparative Example 1 | 6.0 | - | - | - | - | ○ |
| Comparative Example 2 | 91.0 | 2.0 | 100 | 0 | HB | ○ |
| Comparative Example 3 | 90.0 | 1.5 | 100 | 100 | 3H | X Agglomeration |
| Comparative Example 4 | 90.5 | 1.7 | 100 | 100 | 3H | X Agglomeration |

Table 2

| | Initial coating film physical properties | | | | | Coating stability Open stirring (30°C) | |
|---|---|---|---|---|---|---|---|
| | Gel fraction ratio (%) | Coating film elongation (%) | Adhesiveness | | Coating film hardness (pencil) | One week | 3 weeks |
| | | | Initial | After dipping in boiling water | | | |
| Example 6 | 98.0 | 10.0 | 100 | 100 | H | ○ | ○ |
| Example 7 | 98.5 | 8.0 | 100 | 100 | 2H | ○ | ○ |
| Example 8 | 99.5 | 6.0 | 100 | 100 | 3H | ○ | ○ |

Table 2 (continued)

| | Coating film physical properties after open stirring for 3 weeks | | | | |
|---|---|---|---|---|---|
| | Gel fraction ratio (%) | Coating film elongation (%) | Adhesiveness | | Coating film hardness (pencil) |
| | | | Initial | After dipping in boiling water | |
| Example 6 | 97.5 | 9.0 | 100 | 100 | H |
| Example 7 | 98.5 | 8.0 | 100 | 100 | 2H |
| Example 8 | 99.0 | 6.0 | 100 | 100 | 3H |

As apparent from the matters described above, the electrodepositable coating composition of the present invention comprises the imidazole compound which is stably dispersed in an electrodepositable coating system comprising the resin containing a hydroxyl group and a cationizable group and the epoxy resin. A metal catalyst does not have to be blended as a curing catalyst, and therefore there can be obtained the electrodeposited coating film showing a satisfactory adhesiveness even when a metal base material has a smooth surface and having an excellent adhesion on the surface of the metal base material even after a moisture resistance test. Further, the electrodepositable coating composition of the present invention is excellent in a curability of the electrodeposited coating film as well as a storage stability.

## Claims

1. A cationically electrodepositable coating composition comprising:

   a neutralized product obtained by neutralizing a resin (A) having hydroxyl groups and cationizable groups with an acid;
   an epoxy group-containing curing agent (B) having at least two groups on average per molecule of an epoxy group-containing functional group comprising an epoxy group selected from the group consisting of an epoxy group bonded directly to a ring carbon atom of an alicyclic ring or a bridged alicyclic ring and an epoxy group formed by two adjacent carbon atoms constituting the alicyclic ring or the bridged alicyclic ring and an oxygen atom; and
   a neutralized product obtained by neutralizing an imidazole compound (C) having a molecular weight per imidazole ring falling in a range of 68 to 300 with an acid,
   said components (A), (B) and (C) being stably dispersed in an aqueous medium.

2. The coating composition of claim 1, wherein said (A) has primary hydroxyl groups and cationic groups.

3. The coating composition of claim 1, wherein said (A) is a reaction product obtained by reacting a polyepoxide compound obtained from a polyphenol compound and epichlorohydrin with a cationizing agent.

4. The coating composition of claim 3, wherein said polyepoxide compound is polyglycidylether of the polyphenol compound having a number average molecular weight of about 800 to about 2,000 and an epoxy equivalent of 190 to 2,000.

5. The coating composition of claim 1, said resin (A) has a hydroxyl equivalent within the range of 20 to 5,000.

6. The coating composition of claim 1, wherein said resin (A) has an amine value within the range of 3 to 200 calculated as KOH mg/g solids.

7. The coating composition of claim 1, wherein said curing agent (B) has at least 3 epoxy functional groups on average per molecule.

8. The coating composition of claim 1, wherein said epoxy functional group of said curing agent (B) has a structure represented by either of the following general formulae (I) to (IV)

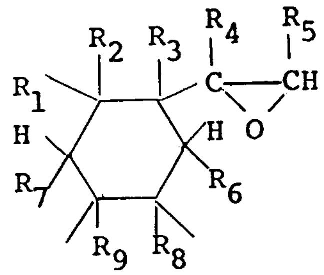

(I)

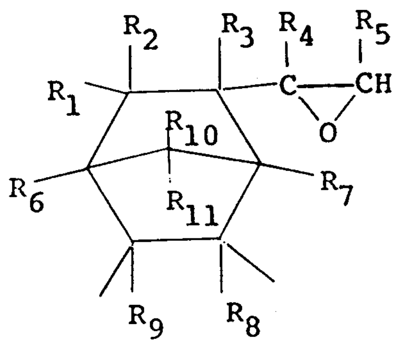

(II)

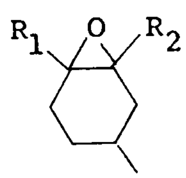 or 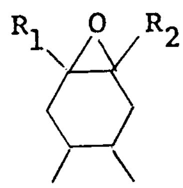

(III)

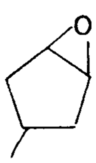 , 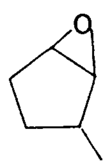 , 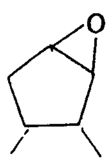 or 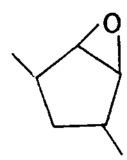

(IV)

wherein $R_1$, $R_2$, $R_3$, $R_5$, $R_6$, $R_7$, $R_{10}$ and $R_{11}$ each represent H, $CH_3$ or $C_2H_5$, and $R_4$, $R_8$ and $R_9$ each represent H or $CH_3$.

**9.** The coating composition of claim 8, wherein said curing agent (B) has an epoxy functional group represented by the following formula (V)

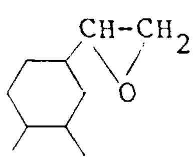

(V)

**10.** The coating composition of claim 8, wherein said curing agent (B) has an epoxy functional group represented by the following formula (VI)

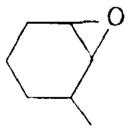 or 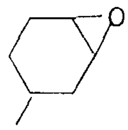 (IV)

**11.** The coating composition of claim 1, wherein said curing agent (B) has an epoxy equivalent within the range of 100 to 2,000.

**12.** The coating composition of claim 1, wherein said curing agent (B) has a number average molecular weight within the range of 400 to 100,000.

**13.** The coating composition of claim 1, wherein the weight ratio of the solids content of said curing agent (B) to said resin (A) is within the range of 0.2 to 1.

**14.** The coating composition of claim 1, wherein the imidazole compound (C) is selected from the group consisting of imidazole, 2-methylimidazole, 2-ethyl-4-methylimidazole, 2-undecylimidazole, 2-heptadecylimidazole, 2-phenylimidazole, 2-phenyl-4-methylimidazole, 1-benzyl-2-methylimidazole, 2-ethylimidazole, 2-isopropylimidazole, 2-phenyl-4-benzylimidazole, 1-cyanoethyl-2-methylimidazole, 1-cyanoethyl-2-ethyl-4-methylimidazole, 1-cyanoethyl-2-undecylimidazole, 1-cyanoethyl-2-isopropylimidazole, 1-cyanoethyl-2-phenylimidazole, 2,4-diamino-6-[2'-methylimidazolyl-(1)']-ethyl-s-triazine, 2,4-diamino-6-[2'-ethyl-4-methylimidazolyl-(1)']-ethyl-s-triazine, 2-methylimidazolium isocyanuric acid adduct, 2-phenylimidazolium isocyanuric acid adduct, 1-aminoethyl-2-methylimidazole, 2-phenyl-4,5-dihydroxymethylimidazole, 2-phenyl-4-methyl-5-hydroxymethylimidazole, 2-phenyl-4-benzyl-5-hydroxymethylimidazole and 4,4'-methylene-bis-(2-ethyl-5-methylimidazole).

**15.** The coating composition of claim 1, wherein the imidazole compound (C) is 2-ethyl-4-methylimidazole, 2-undecylimidazole, 2-heptadecylimidazole, 2-phenylimidazole or 2-phenyl-4-methylimidazole.

**16.** The coating composition of claim 1, which contains the imidazole compound (C) in an amount falling in a range of 0.1 to 10 parts by weight per 100 parts by weight of the total of the resin (A) and the curing agent (B).

**17.** The coating composition of claim 1, which contains resin emulsion particles obtained by dispersing the neutralized product of the resin (A) with an acid and the curing agent (B) together in an aqueous medium, and dispersed particles obtained by dispersing the neutralized product of the imidazole compound (C) with an acid in an aqueous medium.

**18.** The coating composition of claim 1, which contains first emulsion particles obtained by dispersing the neutralized product of the resin (A) with an acid and the neutralized product of the imidazole compound (C) with an acid together in an aqueous medium, and second emulsion particles obtained by dispersing the neutralized product of the resin (A) with an acid and the curing agent (B) together in an aqueous medium.

**19.** A production process for the coating composition of claim 1, comprising the steps of:

preparing a resin emulsion by mixing a resin (A) with a curing agent (B), neutralizing the mixture with an acid and dispersing it in an aqueous medium, or neutralizing the resin (A) in advance with the acid, mixing the resulting neutralized product of the resin (A) with the curing agent (B) and dispersing the mixture in the aqueous medium,
separately preparing a dispersion of an imidazole compound (C) by neutralizing the imidazole compound (C) with an acid and dispersing it in an aqueous medium, and
then mixing said resin emulsion with said dispersion.

**20.** A production process for the coating composition of claim 1, comprising the steps of:

preparing a first emulsion by mixing a resin (A), an imidazole compound (C) and an acid used for neutralizing

both of them in an aqueous medium, or mixing the neutralized product of the resin (A) with an acid and the neutralized product of the imidazole compound (C) with an acid together in the aqueous medium,

separately preparing a second emulsion by mixing the resin (A) with the curing agent (B), neutralizing the mixture with an acid and dispersing it in an aqueous medium, or neutralizing the resin (A) in advance with the acid, mixing the resulting neutralized product of the resin (A) with the curing agent (B) and dispersing the mixture in the aqueous medium, and

then mixing the first emulsion with the second emulsion.

**21.** A cationically electrodepositable bath containing the coating composition of claim 1.

**22.** An article coated with the cationically electrodepositable bath of claim 21.